# EUROPEAN PATENT APPLICATION

(11) **EP 4 343 618 A1**
(43) Date of publication of application: **27.03.2024**
(21) Application number: 23190700.7
(22) Date of filing: 09.08.2023
(51) Int. Cl.: G06K 19/07

(54) **WIRELESS SENSOR WITH EXTENDED POWER FOR USE WITH SPACECRAFT**

(30) Priority: 20.09.2022 US 202217948709
(71) Applicant: Maxar Space LLC, Westminster, CO 80234 (US)
(72) Inventor: BAIN, Harold Mark, Westminster, Colorado, 80234 (US)
(74) Representative: Dehns

(57) **Abstract**

A Radio Frequency Identification ("RFID") sensor (610, 612, 614) harvests power from a RFID interrogation signal (640) received from a RFID reader (225) and harvests power from surrounding RF energy which is at a different frequency than the RF interrogation signal (640). The harvested power is used to operate the sensor (610, 612, 614) and transmit data sensed by the sensor (610, 612, 614).

## Description

### BACKGROUND

The present disclosure relates to wireless sensor technology that can be used with a spacecraft while in space.

A sensor is a device that transforms a measured quantity into a readable format, typically into an electrical signal. There are commercially available sensors for many different measurement purposes. According to their connectivity, sensors can be divided into wired and wireless sensors. Wired sensors are connected via wiring harnesses or cable assemblies to a reader device. Wireless sensors can be read without a physical connection to the sensor, and are often realized by equipping the sensor with a radio transceiver. The transmitted radio signal is interpreted by a receiver which converts the wireless signal into a desired output. Wireless operation can be beneficial in many applications where a wired connection is difficult, for example, due to harsh operating conditions (like temperature and pressure) in space, rotating parts, cost and/or complexity of wiring. However, wireless sensors also have some drawbacks such as limited lifetime due to battery and limited read-out distance due to attenuation and interference.

Based on the power source and communication principle, wireless sensors can be divided into two categories: active sensors and passive sensors. Active wireless sensors usually have both a radio transceiver and an on-board battery that is used to power the transceiver. Active wireless sensors, having their own power sources, can use powerful transmitters and sensitive receivers. However, the battery on board limits the lifetime and also increases the size and weight. Due to the more complex circuit, the price of an active sensor can be much higher than that of a passive sensor.

Unlike active sensors, passive sensors do not require an on-board battery. Therefore they can be less complex, smaller, less expensive, and their lifetime is not limited by the power supply. However, passive sensor have limited transmission range and limited length of sensor readings.

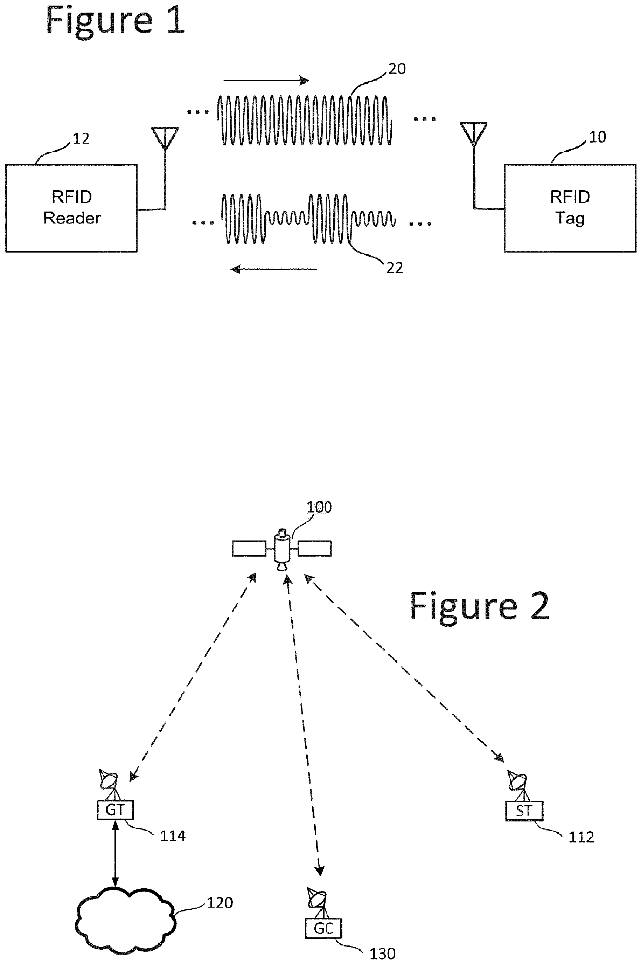

One category of passive wireless sensors comprises radio frequency identification (RFID) tags. RFID is an technology that uses radio waves to communicate between tags/sensors and a reader. For example, Figure 1 depicts a RFID tag 10 and a RFID reader 12, which performs the interrogation of RFID tag 10. In a passive RFID system, the RFID reader 12 supplies RFID tag 10 with essential power in order for it to perform modulation of the RFID reader's interrogation signal. For example, Figure 1 shows RFID reader 12 transmitting a radio frequency (RF) carrier wave (CW) signal 20 (the interrogation signal) to RFID tag 10 in order to actuate RFIF tag 10. In response, RFID tag 10 modulates the received signal based on data to be transmitted and reflects the modulated signal 22 back to RFID reader 12. When RFID tag 10 receives the RF CW signal 20, it also converts the received RF signal 20 to DC voltage (or an AC voltage) that is used to power RFID tag 10.

RFID has been shown to be suitable for sensing by equipping a RFID tag with an external (or internal) sensor and logic to read the sensor. For purposes of this document, a RFID tag that includes or is otherwise physically connected to a sensor is referred to as a RFID sensor. While RFID sensors have been deployed for many uses, RFID sensors (like other passive sensors) have limited transmission range and limited length of sensor readings.

### BRIEF DESCRIPTION OF THE DRAWINGS

Figure 1 depicts a RFID sensor communicating with a RFID reader.
Figure 2 is a block diagram of a spacecraft system.
Figure 3 is a block diagram of an example spacecraft.
Figures 4 and 5 illustrate two views of a spacecraft including antennas.
Figures 6A-C depict a RFID sensor and a RFID reader.
Figure 7 is a block diagram of one embodiment of a RFID sensor.
Figure 8 is a flow chart describing one embodiment of a process for operating a RFID sensor.

### DETAILED DESCRIPTION

It is proposed to use passive RFID sensors for space applications. For example, RFID sensors can be mounted on or near spacecrafts (e.g., satellites, rockets, shuttles, etc.) to measure various properties relevant to the spacecrafts. In such use cases, the RFID reader can be mounted on the spacecraft body (e.g., near and connected to spacecraft control electronics) and the RFID sensor can be mounted at or near the component to be monitored. However, due to the size of many spacecraft, the distance between the RFID reader and the RFID sensor will be too far for reliable wireless data transmission due to the limited transmission range of passive RFID tags that rely on the small amounts of harvested power from the interrogation signal. Furthermore, the small amounts of harvested power from the interrogation signal will limit the sample length of any such sensor.

For example, it may be desired to monitor temperature of a solar array connected to a spacecraft at a distal point of the solar array. However, as described above, the small amounts of harvested power from the interrogation signal may not be enough to allow for reliable transmission of the temperature data back to the RFID reader and will limit the sample length of the temperature sensor (e.g., limit number of samples and resolution of temperature readings).

To overcome the above-described issues, it is proposed to provide a RFID sensor with additional power in order to increase the range of data transmission and increase the length of sensor readings by having the RFID sensor harvest and use power from two radio frequency ("RF") signals, including the RFID interrogation signal received from the RFID reader and an additional RF signal from surrounding RF energy which is at a different frequency (and, possibly, higher power) than the RF interrogation signal.

One example embodiment of a proposed RFID sensor comprises a sensor, a control circuit connected to the sensor such that the control circuit is configured to obtain sensor data from the sensor, a first antenna configured to receive a first RF signal at a first frequency range for RFID, a first voltage circuit connected to the first antenna and the control circuit such that the first voltage circuit is configured to output a first voltage signal to provide power to the control circuit based on the first RF signal, a second antenna configured to receive a second RF signal at a second frequency range that is non-overlapping with the first frequency range, a second voltage circuit connected to the second antenna and the control circuit such that the second voltage circuit is configured to output a second voltage signal to provide power to the control circuit based on the second RF signal, and a RFID transmission circuit connected to the control circuit. The transmission circuit is configured to wirelessly transmit sensor information based on the sensor data via the first antenna in response to the first RF signal. More details are provided below.

Figure 2 is a block diagram of a spacecraft system that can implement the passive RFID sensors for space applications proposed herein. For purposes of this document, space applications are functions performed in space. The term "space" refers to being beyond the Earth's atmosphere, in orbit around the Earth, or at a distance from the Earth's surface that is equivalent to (or greater than) a distance of an object in orbit around the Earth. Examples of space applications include communication, transport, solar system exploration and scientific research.

The example system of Figure 2 includes spacecraft 100, subscriber terminal 112, gateway terminal 114, and ground control terminal 130. Subscriber terminal 112, gateway terminal 114, and ground control terminal 130 are examples of ground terminals. In one embodiment, spacecraft 100 is a satellite; however, spacecraft 100 can be other types of spacecrafts (e.g., shuttle, space station, inter-planet traveling craft, rocket, etc.). Spacecraft 100 may be located, for example, at a geostationary or non-geostationary orbital location. Spacecraft 100 can also be a Low Earth Orbit (LEO) satellite. Spacecraft 100 is communicatively coupled by at least one wireless feeder link to at least one gateway terminal 114 and by at least one wireless user link to a plurality of subscriber terminals (e.g., subscriber terminal 112) via an antenna system. Gateway terminal 114 is connected to the Internet 120. The system allows spacecraft 100 to provide internet connectivity to a plurality of subscriber terminals (e.g., subscriber terminal 12) via gateway terminal 14. Ground control terminal 30 is used to monitor and control operations of spacecraft 10. Other types of spacecraft and other types of space applications can be used with the proposed technology.

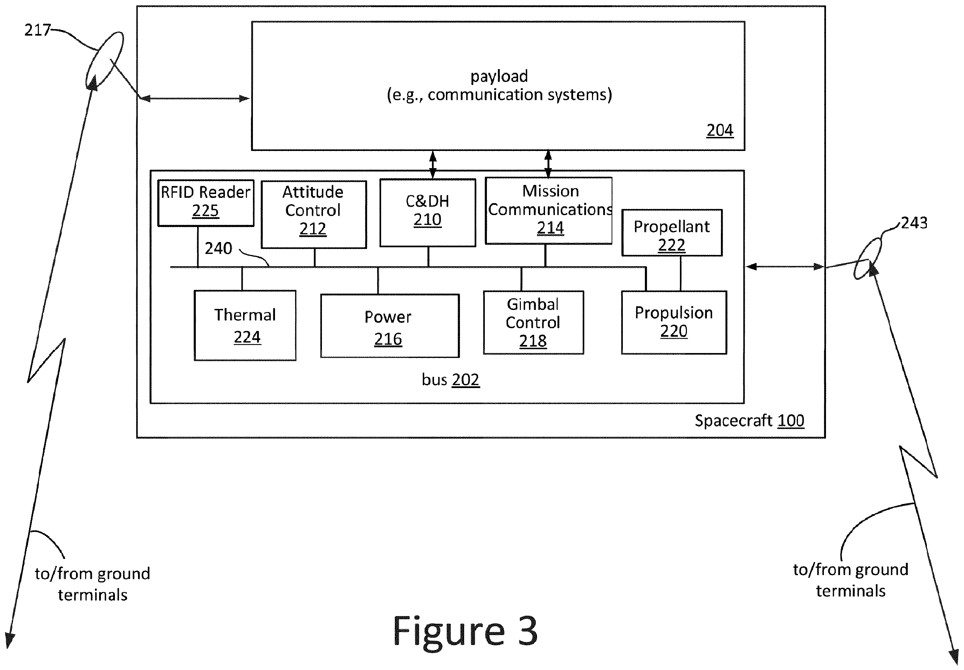

Figure 3 is a block diagram of one embodiment of spacecraft 100, which in one example (as discussed above) is a satellite. In one embodiment, spacecraft 100 includes a bus 202 and a payload 204 carried by bus 202. Some embodiments of spacecraft 100 may include more than one payload. The payload 204 provides the functionality of communication, sensors and/or processing systems needed for the mission of spacecraft 100.

In an example, bus 202 houses and carries the payload 204, such as the components for operation as a communication satellite. The bus 202 includes a number of different functional subsystems or modules, some examples of which are shown. Each of the functional sub-systems typically include electrical systems, as well as mechanical components (e.g., servos, actuators) controlled by the electrical systems. These include a command and data handling module or subsystem (C&DH) 210, attitude control system 212, mission communication system 214, power subsystem 216, gimbal control electronics 218, a propulsion system 220 (e.g., thrusters), propellant 222 to fuel some embodiments of propulsion system 220, and thermal control subsystem 224, all of which are connected by an internal communication network 240, which can be an electrical bus (a "flight harness") or other means for electronic, optical or RF communication when spacecraft 100 is in operation. Also represented are an antenna 243, that is one of one or more antennas used by the mission communication systems 214 for exchanging communications (via RF signals) for operating of the spacecraft with ground terminals, and a payload antenna 217, that is one of one or more antennas used by the payload 204 for exchanging communications (via RF signals) with ground terminals, such as the antennas used by a communication satellite embodiment. The spacecraft also includes one or more RFID readers 225 connected to internal communication network 240 for interrogating RFID sensors positioned at various locations on or near spacecraft 100. Other equipment can also be included.

The command and data handling module 210 includes any processing unit or units for handling data and commands including command control functions for spacecraft 100, such as for attitude control functionality and orbit control functionality. The attitude control systems 212 can include devices including torque rods, wheel drive electronics, and control momentum gyro control electronics, for example, that are used to monitor and control the attitude of the space craft. Mission communication systems 214 includes wireless communication and processing equipment for receiving telemetry data/commands, other commands from the ground control terminal 130 to the spacecraft and ranging to operate the spacecraft. Processing capability within the command and data handling module 210 is used to control and operate spacecraft 10. An operator on the ground can control spacecraft 100 by sending commands via ground control terminal 130 to mission communication systems 214 to be executed by processors within command and data handling module 210. In one embodiment, command and data handling module 210 and mission communication system 214 are in communication with payload 204. In some example implementations, bus 202 includes one or more antennas as indicated at 243 connected to mission communication system 214 for wirelessly communicating between ground control terminal 30 and mission communication system 214. Power subsystems 216 can include one or more solar arrays (panels) and charge storage (e.g., one or more batteries) used to provide power to spacecraft 100. Propulsion system 220 (e.g., thrusters) is used for changing the position or orientation of spacecraft 100 while in space to move into orbit, to change orbit or to move to a different location in space. The gimbal control electronics 218 can be used to move and align the antennas, solar panels, and other external extensions of the spacecraft 100.

In one embodiment, payload 204 is for a communication satellite and includes an antenna system (represented by payload antenna 217) that provides a set of one or more beams (e.g., spot beams) comprising a beam pattern used to receive wireless signals from ground stations and/or other spacecraft, and to send wireless signals to ground stations and/or other spacecraft. In some implementations, mission communication system 214 acts as an interface that uses the antennas of payload 204 to wirelessly communicate with ground control terminal 30. In other embodiments, the payload could alternately or additionally include an optical payload, such as one or more telescopes or imaging systems along with their control systems, which can also include RF communications to provide uplink/downlink capabilities.

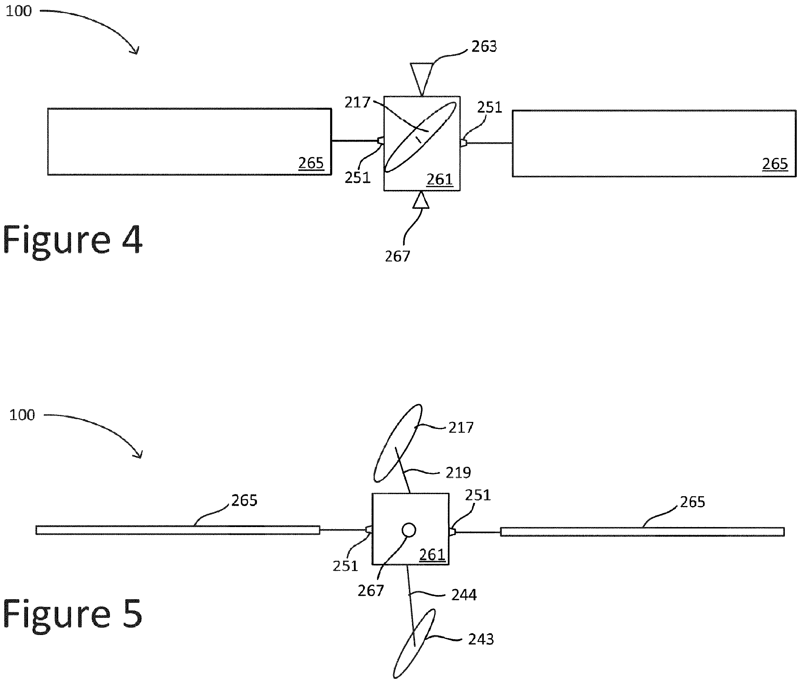

Figures 4 and 5 show exterior views of an embodiment of spacecraft 100 in more detail. More specifically, Figures 4 and 5 show two views of an embodiment of spacecraft 100, where Figure 5 shows the spacecraft rotated by 90°about the axis of the solar arrays 265 relative to Figure 4. The spacecraft 100 includes a spacecraft body 261 from which extend two, in this example, deployed solar arrays 265. Also attached to spacecraft body 261 are antennas, including payload antenna 217, which is attached to spacecraft body 261 by boom 219 and antenna 243, which is attached to spacecraft body 261 by boom 244, by which the satellite can receive and transmit signals. Attached to the spacecraft body 261 are a number of thrusters, as shown at 263 and 267, which typically include one or more main thrusters and a number of attitude and orbit control thrusters. Internal to the body will be the spacecraft's frame (not show) within which the functional sub-systems can be installed. While only two antennas (antenna 243 and payload antenna 217) are illustrated in Figures 4 and 5, any number of antennas may be provided on a satellite. The present technology is not limited to any particular number or configuration of antennas.

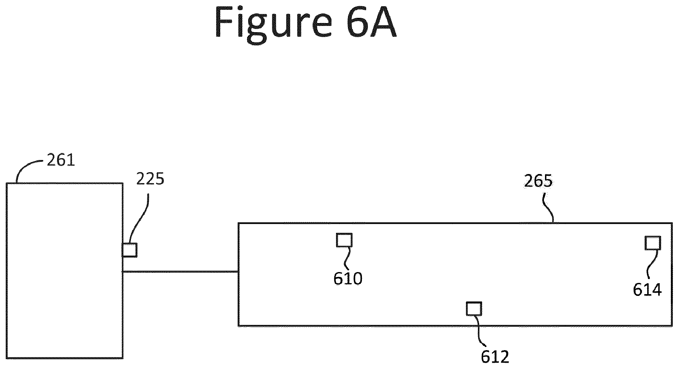

Figures 6A-6C are close-up views of a portion of spacecraft body 261 and a deployed solar array 265. Figure 6A shows RFID reader 225 mounted on an outside surface of spacecraft body 261. In other embodiments, RFID reader 225 can be mounted within RFID reader 225. Figure 6A also shows three RFID sensors 610, 612, and 614 mounted on solar array 265. RFID sensors 610, 612, and 614 can be mounted on an exterior panel surface or within solar array 265, and are configured to sense temperature at the solar array. Although Figure 6A shows three RFID sensors, more or less than three RFID sensors can be used. RFID sensors 610, 612, and 614 can be used to measure temperature, strain, stress, or vibration. In other embodiments, RFID sensors 610, 612, and 614 can be mounted on other components to measure temperature, strain, stress, vibration, switch position, presence (or no presence) of a component, or other property. In one embodiment, one or more RFID sensors can be mounted on an antenna reflector of the spacecraft and are configured to sense temperature at the antenna reflector (e.g., see antennas 217 and/or 243). In one embodiment, RFID reader 225 transmits an RF signal (the interrogation signal) to RFID sensors 610, 612, and 614 mounted on solar array 265. In one embodiment, the RF signal transmitted by RFID reader 225 comprises one or more pulses (e.g., each pulse includes a sine wave). In response to the one or more RF pulses (the interrogation signal) in the 900 MHz band, one or more of RFID sensors 610, 612, and 614 will transmit back to RFID reader 225 a temperature reading at solar array 265.

RFID sensors 610, 612, and 614 can convert the received one or more RF pulses (the interrogation signal) in the 900 MHz band to power for use by the RFID sensors 610, 612, and 614. However, because one or more of RFID sensors 610, 612, and 614 are mounted further from RFID reader 225 than typical RFID tags, RFID sensors 610, 612, and 614 will need additional power to obtain sensor measurements and transmit the information back to RFID reader 225. To meet this need for additional power, the RFID sensors are configured to harvest a parallel form of power for the sensor electronics by capturing surrounding RF energy which is at a different frequency (e.g., C band, S band, X band) than RFID operations (e.g., 900 MHz). When in space, satellites (and other spacecraft), for example, tend to be in noisy environments (from an RF perspective) because the satellites (and other spacecraft), generate/emit a lot of RF energy due to their communicating via RF with ground terminals and other spacecraft. Additionally, environments in space can have a lot of stray RF energy from other sources.

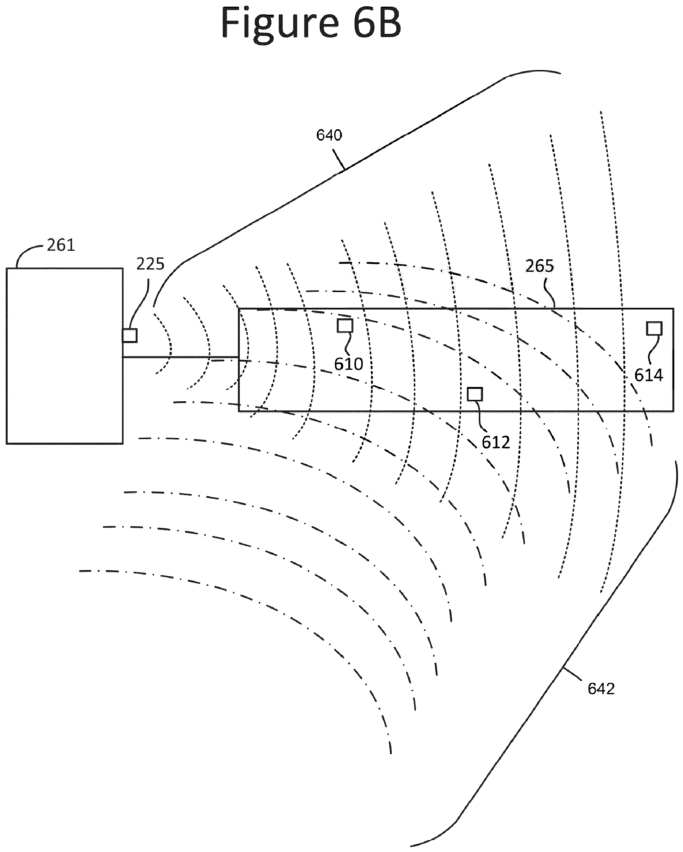

Figure 6B shows RFID reader 225 generating/emitting a first RF signal 640 at a first frequency range for RFID applications (e.g., at or around 900 MHz) that is received at RFID sensors 610, 612, and 614. In one embodiment, this first RF signal 640 is an RFID interrogation signal that may (or may not) include one or more pulses of energy. In one embodiment, the first RF signal 640 generated and transmitted by RFID reader 225 is in the form of signal 20 depicted in Figure 1. Figure 6B also shows a second RF signal 642 at a second frequency range (e.g., 4-8GHz) that is non-overlapping with the first frequency range being provided to RFID sensors 610, 612, and 614. In one embodiment, as discussed above, second RF signal 642 is generated by spacecraft 100 and received by RFID sensors 610, 612, and 614 when operating in space. For purposes of this document, a frequency ranges includes one frequency or a contiguous set of frequencies.

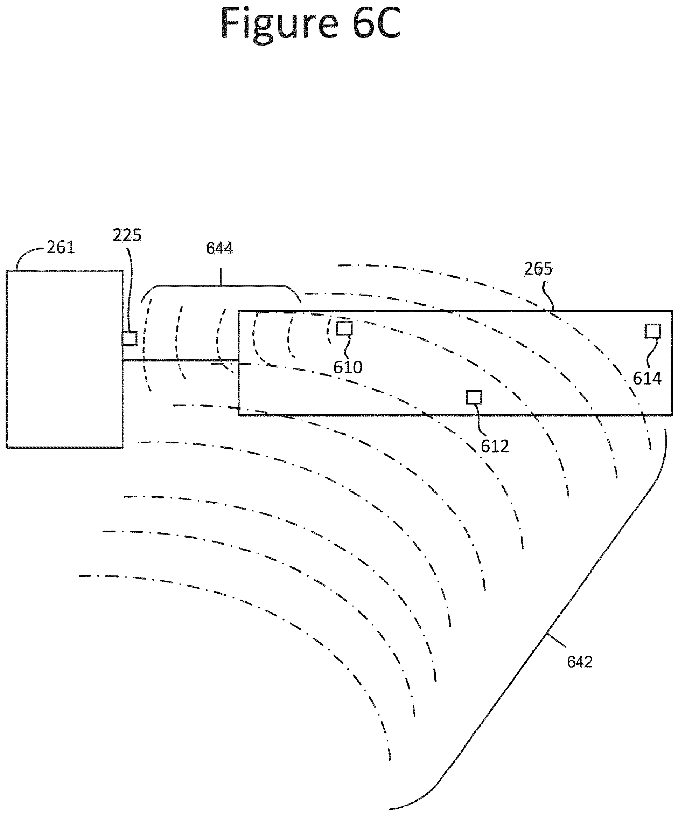

In response to first RF signal 640, one or more of RFID sensors 610, 612, and 614 will obtain sensor readings and transmit information based on those sensor readings back to RFID reader 225 using power harvested from first RF signal 640, second RF signal 642 or both. For example, Figure 6C shows RFID sensor 610 transmitting a response signal 644 (e.g., information based on those sensor readings) back to RFID reader 225 using power harvested from only the second RF signal 642.

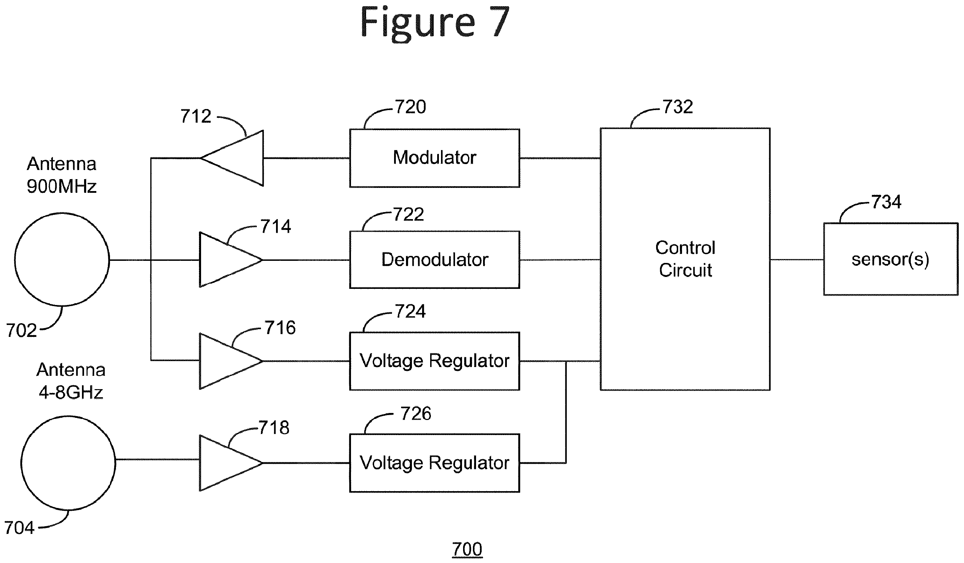

Figure 7 is a block diagram of one embodiment of a RFID sensor 700, which is one example implementation of any one or more of RFID sensors 610, 612, and 614. Note that other architectures of a RFID sensor can also be used and the technology proposed herein is not limited to exact structure depicted in Figure 7.

RFID sensor 700 includes at least two antennas: antenna 702 configured to receive first RF signal 640 at 900 MHz and antenna 704 configured to receive second RF signal 642 at a frequency range of 4-8 GHz. No particular type of antenna is required as any suitable antenna known in the art will suffice. It may be possible to use one antenna to receive both signals in conjunction with filters or other electronics. In one embodiment, RFID sensor 700 as well as antennas 702 and 704 are all mounted on the spacecraft (e.g., on a solar array) for receiving RF signals in space.

The output of antenna 702 is provided to Analog RF Interface circuit 714 and Analog RF Interface circuit 716, which include amplifiers, filters and other suitable electronics. The output of Analog RF Interface circuit 716 is provided to voltage regulator circuit 724 which harvests power from the signal received at antenna 716. The output of voltage regulator circuit 724 is a first voltage signal that is provided to control circuit 732 to power the control circuit 732 and sensor(s) 734 based on the first RF signal received at antenna 716. The output of Analog RF Interface circuit 714 is provided to demodulator circuit 722 which demodulates the first RF signal received at antenna 716 to recover the data carried by the signal (e.g., interrogation request, sensor ID, etc.). The recovered data is provided to control circuit 732. In response to the first RF signal, control circuit 732 sends information for one or more sensor readings to modulator circuit 720 which creates an output signal that is sent to Analog RF Interface circuit 712 and then to antenna 702 for wireless transmission as response signal 644 back to RFID reader 225.

The output of antenna 704 is provided to Analog RF Interface circuit 718, which include amplifiers, filters and other suitable electronics. The output of Analog RF Interface circuit 718 is provided to voltage regulator circuit 726 which harvests power from the signal received at antenna 704. The output of voltage regulator circuit 726 is a second voltage signal that is provided to control circuit 732 to power the control circuit 732 and sensor(s) 734 based on the second RF signal received at antenna 716. In one embodiment, the first voltage signal from voltage regulator circuit 724 and the second voltage signal from voltage regulator circuit 726 are connected together such that control circuit 732 receives the highest voltage of the first voltage signal and the second voltage signal. In another embodiment, the first voltage signal from voltage regulator circuit 724 and the second voltage signal from voltage regulator circuit 726 are connected to a voltage combining circuit (not depicted in Figure 7) that combines (i.e. additive) the two voltage signals so that the control circuit receives and uses combined power from the first voltage signal and the second voltage signal.

Sensor(s) 734 can be one or more sensors that sense temperature, strain, stress, vibration, switch position, presence (or no presence) of a component, or other properties.

Control circuit 732 is a circuit that controls RFID sensor 700 including obtaining sensor data from sensor(s) 734 and communicating with RFID reader 225. For example, control circuit 732 can include analog circuits, digital circuits, and one or more microprocessors/controllers. As discussed above, control circuit 732 and sensor(s) 734 are powered from the voltage harvested from the signal received at antennas 702 and 704. In one embodiment, the amount of power from the second voltage signal is significantly greater than the amount of power from the first voltage signal; therefore, (in one embodiment) the RFID sensor responds to the interrogation signal using power from the second voltage signal (e.g., sense the sensor data and wirelessly transmit the sensor information using power from the second voltage signal). In one embodiment, the RFID sensor 700 does not include and is not connected to a battery.

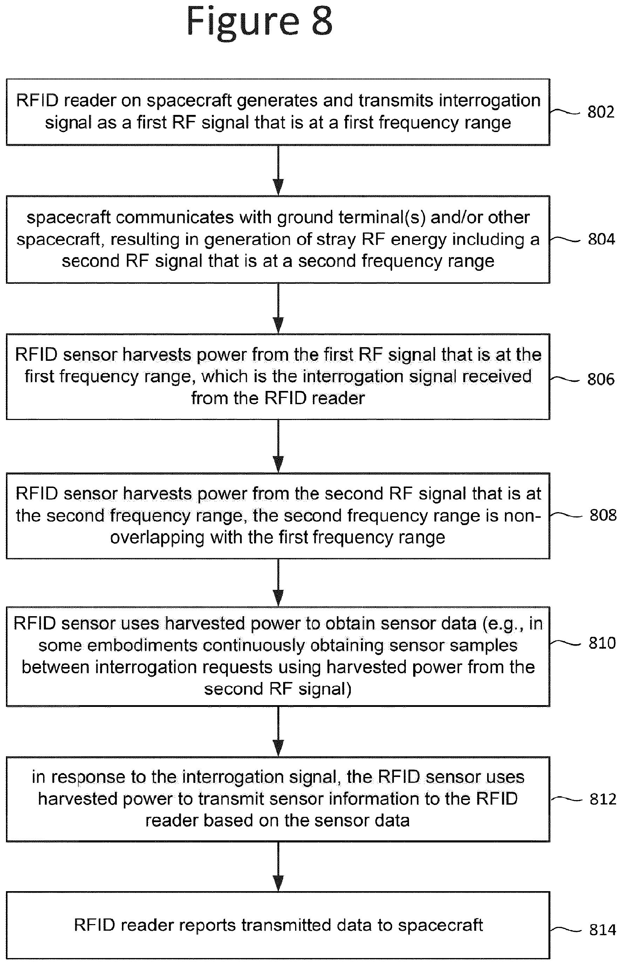

Figure 8 is a flow chart describing one embodiment of a process for operating RFID sensor 700. In step 802, RFID reader 225 on spacecraft 100 (in space) generates and transmits an interrogation signal as a first RF signal that is at a first frequency range (e.g., 900 MHz). That first RF signal is received in space at RFID sensor 700. In step 804, spacecraft 100 communicates (in/from space) with ground terminal(s) and/or other spacecraft, resulting in generation of stray RF energy including a second RF signal that is at a second frequency range (e.g., 4-8GHz). In step 806, RFID sensor 700 harvests power from the first RF signal that is at the first frequency range, which is the interrogation signal received from the RFID reader. In step 808, RFID sensor 700 harvests power from the second RF signal that is at the second frequency range, the second frequency range is non-overlapping with the first frequency range. For purposes of this document, the term "non-overlapping" indicates that none of the frequencies in the first frequency range are also in the second frequency range. In some embodiments, it is preferable that the first frequency range and second frequency range are far apart. In step 810, RFID sensor 700 uses harvested power (from either or both of the first RF signal and the second RF signal) to sense data using the sensor(s) 734 (e.g., in some embodiments continuously obtaining sensor samples between interrogation requests using harvested power from the second RF signal). In step 812, in response to the interrogation signal, RFID sensor 700 uses harvested power (from either or both of the first RF signal and the second RF signal) to transmit information to RFID reader 225 based on the sensor data read in step 810. The information based on the sensor data can include the actual sensor data, a derivative of the sensor data or conclusions by control circuit 732 that are made using the sensor data. In step 814, RFID reader 225 reports transmitted data to other components of spacecraft 100 via communication network 240. In one embodiment, the first RF signal comprises multiple RFID requests received from the RFID reader, the transmission circuit is configured to wirelessly transmit the sensor information to the RFID reader in response to the RFID interrogation signal, the sensor is configured to continuously sense the sensor data using power from the second RF signal.

A RFID sensor has been disclosed that has a larger range of communication and the ability to take longer samples since there is more power available to the RFID sensor.

One embodiment includes a sensor system, comprising: a sensor; a control circuit connected to the sensor, the control circuit is configured to obtain sensor data from the sensor; a first antenna configured to receive a first radio frequency ("RF") signal at a first frequency range for Radio Frequency Identification ("RFID"); a first voltage circuit connected to the first antenna and the control circuit, the first voltage circuit is configured to output a first voltage signal to provide power to the control circuit based on the first RF signal; a second antenna configured to receive a second RF signal at a second frequency range that is non-overlapping with the first frequency range; a second voltage circuit connected to the second antenna and the control circuit, the second voltage circuit is configured to output a second voltage signal to provide power to the control circuit based on the second RF signal; and a RFID transmission circuit connected to the control circuit, the transmission circuit is configured to wirelessly transmit sensor information based on the sensor data via the first antenna in response to the first RF signal.

In one example implementation, the first RF signal is an RFID interrogation signal received from a RFID reader mounted on a spacecraft, the first antenna and the second antenna are mounted on the spacecraft (e.g., on a solar array or antenna reflector of the spacecraft), the first antenna is configured to receive the first RF signal in space, the second antenna is configured to receive the second RF signal in space, and the transmission circuit is configured to wirelessly transmit the sensor information to the RFID reader in space.

In an embodiment, the first RF signal is an RFID interrogation signal received from a RFID reader mounted on a spacecraft; and the second RF signal is generated by the spacecraft.

In an embodiment, the transmission circuit is configured to wirelessly transmit the sensor information via the first antenna using power from the second voltage signal.

In an embodiment, the sensor is configured to sense the sensor data using power from the second voltage signal.

In an embodiment, the first RF signal is a RFID interrogation signal received from an RFID reader mounted on a spacecraft; and the sensor is mounted on a solar array of the spacecraft and is configured to sense temperature at the solar array.

In an embodiment, the first RF signal is an RFID interrogation signal received from a RFID reader mounted on a spacecraft; and the sensor is mounted on an antenna reflector of the spacecraft and is configured to sense temperature at the antenna reflector.

In an embodiment, there is a RFID reader mounted on a spacecraft, the first RF signal is a RFID interrogation signal received from the RFID reader, the transmission circuit is configured to wirelessly transmit the sensor information (in space) to the RFID reader in response to the RFID interrogation signal.

In an embodiment, there is a RFID reader mounted on a spacecraft, the first RF signal comprises multiple RFID requests received from the RFID reader, the transmission circuit is configured to wirelessly transmit the sensor information (in space) to the RFID reader in response to one or more of the multiple RFID requests, the sensor is configured to continuously sense the sensor data using power from the second voltage signal.

In an embodiment, the control circuit uses power from a highest voltage output of the first voltage signal and the second voltage signal.

In an embodiment, the control circuit uses combined power from the first voltage signal and the second voltage signal.

In an embodiment, (the sensor does not include and is not connected to a battery) the first voltage circuit comprises a first voltage regulator; the second voltage circuit comprises a second voltage regulator; and the transmission circuit comprises a demodulation circuit configured to receive the first RF signal and a modulation circuit configured to transmit the sensor information.

One embodiment includes a method of operating a sensor system, comprising: harvesting power from a first radio frequency ("RF") signal that is at a first frequency range and is received from a Radio Frequency Identification ("RFID") reader; harvesting power from a second RF signal that is at a second frequency range, the second frequency range is non-overlapping with the first frequency range; obtaining sensor data using a sensor; and using harvested power to transmit sensor information to the RFID reader based on the sensor data.

In an embodiment, the first RF signal is received in space from the RFID reader.

In an embodiment, the obtaining the sensor data is performed using the harvested power.

In an embodiment, the first RF signal is received in space from the RFID reader; the RFID reader is mounted on a spacecraft; and the second RF signal is generated by the spacecraft in space.

In an embodiment, the first RF signal is an RFID interrogation signal; and the using harvested power to transmit sensor information to the RFID reader is performed in response to the interrogation signal using harvested power from the second RF signal.

In an embodiment, wherein the first RF signal comprises a set of RFID interrogation requests, the method further comprising: continuously obtaining sensor samples between interrogation requests using harvested power from the second RF signal.

One embodiment includes a sensor system, comprising: a spacecraft; a Radio Frequency Identification ("RFID") reader mounted on the spacecraft; and a RFID sensor configured to wirelessly communicate with the RFID reader in space. The RFID sensor is configured to harvest power from a first radio frequency ("RF") signal at a first frequency range received from the RFID reader and from a second RF signal at a second frequency range that is different than the first frequency range.

In an embodiment, the first RF signal is a RFID interrogation signal; and the second RF signal is generated by the spacecraft.

In an embodiment, the first RF signal is a RFID interrogation signal; and the RFID sensor is configured to transmit data to the RFID reader in response to the interrogation signal using harvested power from the second RF signal.

In an embodiment, the first RF signal is a RFID interrogation signal; and the RFID sensor is configured to transmit data to the RFID reader in response to the interrogation signal using harvested power from the first RF signal and the second RF signal.

In an embodiment, the RFID sensor does not include and is not connected to a battery

For purposes of this document, it should be noted that the dimensions of the various features depicted in the figures may not necessarily be drawn to scale.

For purposes of this document, reference in the specification to "an embodiment," "one embodiment," "some embodiments," or "another embodiment" may be used to describe different embodiments or the same embodiment.

For purposes of this document, a connection may be a direct connection or an indirect connection (e.g., via one or more other parts). In some cases, when an element is referred to as being connected or coupled to another element, the element may be directly connected to the other element or indirectly connected to the other element via intervening elements. When an element is referred to as being directly connected to another element, then there are no intervening elements between the element and the other element. Two devices are "in communication" if they are directly or indirectly connected so that they can communicate electronic signals between them.

For purposes of this document, the term "based on" may be read as "based at least in part on."

For purposes of this document, without additional context, use of numerical terms such as a "first" object, a "second" object, and a "third" object may not imply an ordering of objects, but may instead be used for identification purposes to identify different objects.

For purposes of this document, the term "set" of objects may refer to a "set" of one or more of the objects.

The foregoing detailed description has been presented for purposes of illustration and description. It is not intended to be exhaustive or to limit the subject matter claimed herein to the precise form(s) disclosed. Many modifications and variations are possible in light of the above teachings. The described embodiments were chosen in order to best explain the principles of the disclosed technology and its practical application to thereby enable others skilled in the art to best utilize the technology in various embodiments and with various modifications as are suited to the particular use contemplated. It is intended that the scope of the present technology be defined by the claims appended hereto.

## Claims

1. A sensor system, comprising:
a sensor;
a control circuit connected to the sensor, the control circuit is configured to obtain sensor data from the sensor;
a first antenna configured to receive a first radio frequency ("RF") signal at a first frequency range for Radio Frequency Identification ("RFID");
a first voltage circuit connected to the first antenna and the control circuit, the first voltage circuit is configured to output a first voltage signal to provide power to the control circuit based on the first RF signal;
a second antenna configured to receive a second RF signal at a second frequency range that is non-overlapping with the first frequency range;
a second voltage circuit connected to the second antenna and the control circuit, the second voltage circuit is configured to output a second voltage signal to provide power to the control circuit based on the second RF signal; and
a RFID transmission circuit connected to the control circuit, the transmission circuit is configured to wirelessly transmit sensor information based on the sensor data via the first antenna in response to the first RF signal.

2. The sensor system of claim 1, wherein:
the first RF signal is an RFID interrogation signal received from a RFID reader mounted on a spacecraft;
the first antenna and the second antenna are mounted on the spacecraft;
the first antenna is configured to receive the first RF signal in space;
the second antenna is configured to receive the second RF signal in space; and
the transmission circuit is configured to wirelessly transmit the sensor information to the RFID reader in space.

3. The sensor system of claim 1 or 2, wherein:
the first RF signal is an RFID interrogation signal received from a RFID reader mounted on a spacecraft; and
the second RF signal is generated by the spacecraft.

4. The sensor system of any preceding claim, wherein:
the transmission circuit is configured to wirelessly transmit the sensor information via the first antenna using power from the second voltage signal, and/or wherein:
the sensor is configured to sense the sensor data using power from the second voltage signal.

5. The sensor system of any preceding claim, wherein:
the first RF signal is a RFID interrogation signal received from an RFID reader mounted on a spacecraft; and
the sensor is mounted on a solar array of the spacecraft and is configured to sense temperature at the solar array.

6. The sensor system of any preceding claim, wherein:
the first RF signal is an RFID interrogation signal received from a RFID reader mounted on a spacecraft; and
the sensor is mounted on an antenna reflector of the spacecraft and is configured to sense temperature at the antenna reflector.

7. The sensor system of any preceding claim, further comprising;
a RFID reader mounted on a spacecraft, the first RF signal is a RFID interrogation signal received from the RFID reader, the transmission circuit is configured to wirelessly transmit the sensor information in space to the RFID reader in response to the RFID interrogation signal.

8. The sensor system of any preceding claim, further comprising;
a RFID reader mounted on a spacecraft, the first RF signal comprises multiple RFID requests received from the RFID reader, the transmission circuit is configured to wirelessly transmit the sensor information in space to the RFID reader in response to one or more of the multiple RFID requests, the sensor is configured to continuously sense the sensor data using power from the second voltage signal.

9. The sensor system of any preceding claim, wherein:
the control circuit uses power from a highest voltage output of the first voltage signal and the second voltage signal, and/or wherein:
the control circuit uses combined power from the first voltage signal and the second voltage signal.

10. The sensor system of any preceding claim, wherein:
the sensor does not include and is not connected to a battery.
the first voltage circuit comprises a first voltage regulator;
the second voltage circuit comprises a second voltage regulator; and
the transmission circuit comprises a demodulation circuit configured to receive the first RF signal and a modulation circuit configured to transmit the sensor information.

11. A method of operating a sensor system, comprising:
harvesting power from a first radio frequency ("RF") signal that is at a first frequency range and is received from a Radio Frequency Identification ("RFID") reader;
harvesting power from a second RF signal that is at a second frequency range, the second frequency range is non-overlapping with the first frequency range;
obtaining sensor data using a sensor; and
using harvested power to transmit sensor information to the RFID reader based on the sensor data.

12. The method of claim 11, wherein:
the first RF signal is received in space from the RFID reader, and/or
the obtaining the sensor data is performed using the harvested power.

13. The method of claim 11 or 12, wherein:
the first RF signal is received in space from the RFID reader;
the RFID reader is mounted on a spacecraft; and
the second RF signal is generated by the spacecraft in space.

14. The method of any one of claims 11 to 13, wherein:
the first RF signal is an RFID interrogation signal; and
the using harvested power to transmit sensor information to the RFID reader is performed in response to the interrogation signal using harvested power from the second RF signal.

15. The method of any one of claims 11 to 14, wherein the first RF signal comprises a set of RFID interrogation requests, the method further comprising:
continuously obtaining sensor samples between interrogation requests using harvested power from the second RF signal.
